# FASCICULE DE BREVET EUROPEEN

(11) **EP 1 034 750 B1**
(45) Date de publication et mention de la délivrance du brevet: **26.10.2005**
(21) Numéro de dépôt: 00400679.7
(22) Date de dépôt: 10.03.2000
(51) Int. Cl.: A61C 8/00

(54) **Implant dentaire comportant des moyens anti-rotation des suprastructures**
Zahnimplantat mit Mitteln zur Verhinderung der Drehbewegung der Aufbaustruktur
Dental implant having anti-rotation means for the upperstructures

(30) Priorité: 12.03.1999 FR 9903054
(43) Date de publication de la demande: 13.09.2000
(73) Titulaire: Peltier, Guy Gabriel, 92500 Rueil-Malmaison (FR); Gourlaouen-Preissler, Jeanine, 93100 Montreuil (FR)
(72) Inventeur: Peltier, Guy Gabriel, 92500 Rueil-Malmaison (FR)
(74) Mandataire: Bernasconi, Jean Raymond

(56) Documents cités:
- EP-A- 0 313 222
- WO-A-98/52488
- FR-A- 2 766 354

## Description

La présente invention a trait à un perfectionnement aux implants dentaires et, notamment, à un implant avec un blocage anti-rotationnel suffisant des suprastructures tel qu'un pilier ou faux-moignon, sur le corps d'implant proprement dit.

Un implant dentaire comporte usuellement un corps d'implant, de préférence extérieurement fileté et intérieurement taraudé, destiné à être implanté dans le tissu osseux de la mandibule ou du maxillaire, et une pièce pilier ou faux-moignon susceptible d'être transfixée sur le corps d'implant, de façon à s'élever au dessus du corps d'implant, pour pouvoir recevoir une prothèse dentaire. Afin que la prothèse soit convenablement orientée avec un bon parallélisme avec les dents naturelles, il est nécessaire que le praticien puisse orienter, autour de l'axe du corps d'implant, la pièce pilier ou faux-moignon puis la fixer. Il en est de même pour l'inclinaison, qui peut être obtenue soit par un moyen d'inclinaison variable, soit par un jeu de piliers pré-inclinés. Pour un réglage angulaire en rotation autour de l'axe du corps d'implant, il est connu d'utiliser des moyens d'indexation tel qu'un assemblage polygonal, par exemple à 6 pans. Ces moyens d'indexation connus créent des diminutions locales d'épaisseur qui sont préjudiciables à la solidité de l'implant, compte tenu des très gros efforts auxquels il peut être soumis. En outre, le nombre de positions angulaires est faible. Si l'on veut augmenter le nombre de positions angulaires, les dimensions des facettes diminuent, ce qui réduit la résistance à la rotation, compte tenu des efforts très importants que peut subir l'implant, et l'on voit souvent des désolidarisations angulaires chez les patients.

Le document EP 0 313 222 décrit un implant dentaire comprenant une pièce intermédiaire, bloquée en rotation sur le corps d'implant implanté dans le tissus osseux, par une creusure à section hexagonale coopérant avec une extrémité hexagonale du corps d'implant, cette pièce intermédiaire étant pourvue de moyens d'indexation angulaire à son extrémité supérieure pour recevoir, de façon indexée, un pilier qui peut supporter la dent artificielle, lesdits moyens d'indexation pouvant prendre des formes diverses, y compris celle d'une denture radiale comprenant un nombre de dents limité. Aucune indication ne ressort de ce document, sur les efforts de rotation relatifs que ces pièces peuvent subir les unes par rapport aux autres.

La présente invention se propose de remédier à ces inconvénients et de fournir un implant dentaire particulièrement résistant à tous les efforts, y compris en rotation, tout en étant simple, très facile à monter, et fournissant un grand nombre de positions angulaires.

L'invention a pour objet un implant dentaire comportant un corps d'implant destiné à être implanté dans le tissu osseux de la mandibule ou du maxillaire, une pièce dite pilier ou faux-moignon devant recevoir une prothèse dentaire, l'ensemble des deux pièces implant et pilier étant destiné à être solidarisé par une vis de transfixation, lesdites deux pièces étant appliquées l'une sur l'autre par deux faces comportant un grand nombre de dents radiales complémentaires, notamment de 24 à 36 dents, caractérisé en ce que les sections des dents ont des angles de 45° à 90°.

Le nombre de ces dents est de préférence de 18 ou 24 à 36 dents.

Ainsi, lorsque le pilier ou faux-moignon est monté sur le corps d'implant, on obtient à la fois un blocage en rotation dans la position angulaire voulue et un centrage parfait des deux pièces, qui peuvent être ensuite très facilement solidarisées définitivement par un moyen de blocage tél qu'une vis de transfixation (3).

Outre le parfait centrage et l'anti-rotation, on obtient également un excellent effet anti-basculement et anti-glissement, avec absence totale de jeu.

Ces dents (4) (4bis) sont de préférence à section triangulaire et forment de préférence un angle de section de 45° à 90°. Elles débouchent, de préférence, sur le diamètre extérieur de l'implant (1) et du pilier ou faux-moignon (2) (2bis).

Lorsque l'on taille les dents dans les faces précitées, on comprend que la largeur de matière disponible s'accroît lorsque l'on se déplace radialement depuis la partie interne de l'implant vers sa périphérie externe. Il est préféré que les dents soient taillées de façon que chacune des deux faces destinées à venir en contact, ne présente que des arêtes vives de dents et des fonds aigus sans aucune partie plate. Ceci conduit alors à déplacer une meulé de section triangulaire qui usine les dents, dans un plan radial de l'implant, mais dans une direction légèrement inclinée par rapport au plan perpendiculaire à l'axe de l'implant.

Par exemple, si les deux faces du corps d'implant et du pilier sont initialement planes, et donc perpendiculaires à l'axe commun de l'implant, on taillera, de préférence, les dentures de l'une des deux pièces de façon que le fond de la dent soit incliné dans le plan radial, de préférence de 8° à 12°, la profondeur de dent croissant en direction de la périphérie, et les sommets restant, de préférence, dans le plan initial de la face, alors que l'autre pièce sera taillée de façon que le fond de la denture ne soit pas incliné, les sommets s'inclinant alors, avec la taille, de façon complémentaire au fond des dents de la première pièce.

Dans un autre exemple, les fonds des dents sont inclinés, sur chaque pièce, de 4° à 6°, les passages de fraise étant donc orientés de façon inclinée pour chaque pièce.

Le pilier ou faux-moignon (2) (2bis) peut être droit ou pré-incliné de 5° en 5°, jusqu'à 20°, ce qui permet, avec un choix d'un jeu de piliers, d'obtenir 5 inclinaisons angulaires par rapport à l'axe de l'implant.

D'autres avantages et caractéristiques de l'invention apparaîtront à la lecture de la description suivante, faite à titre d'exemple non limitatif et, se référant au dessin annexé dans lequel :
- La figure 1 représente une vue avec coupe axiale du pilier ou faux-moignon droit (2) avec la vis de transfixation (3), selon l'invention, dans une première forme de réalisation.
- La figure 2 représente une vue de l'implant (1) en coupe axiale, avec sa partie supra-osseuse (9) se terminant par sa face comportant les 24 à 36 dents taillées (4) de 45° à 90° maximum, anti-rotationnelles.
- La figure 3 représente une vue avec coupe axiale d'un pilier ou faux-moignon (2bis) pré-incliné, avec sa face comportant les 24 à 36 dents taillées (4bis) de 45° à 90° maximum, anti-rotationnelles ; cette face s'adaptant parfaitement avec la face similaire de l'implant (1) suivant l'emboîtement des dents (5).
- La figure 4 représente une vue avec coupe axiale de l'implant (1) selon l'invention montrant la partie supra-osseuse (9) d'une valeur de 0,5 à 1 mm, ce qui peut correspondre à un temps chirurgical unique.
- La figure 5 représente une vue en coupe partielle des deux parties taillées (5), face de l'implant (1) et, face du pilier (2) s'emboîtant parfaitement, étant donné le taillage identique de 24 à 36 dents (4) (4bis), suivant un diamètre de l'implant (1) égale au diamètre du pilier (2).
- La figure 6 représente une vue de dessus de la denture (4) du corps d'implant.

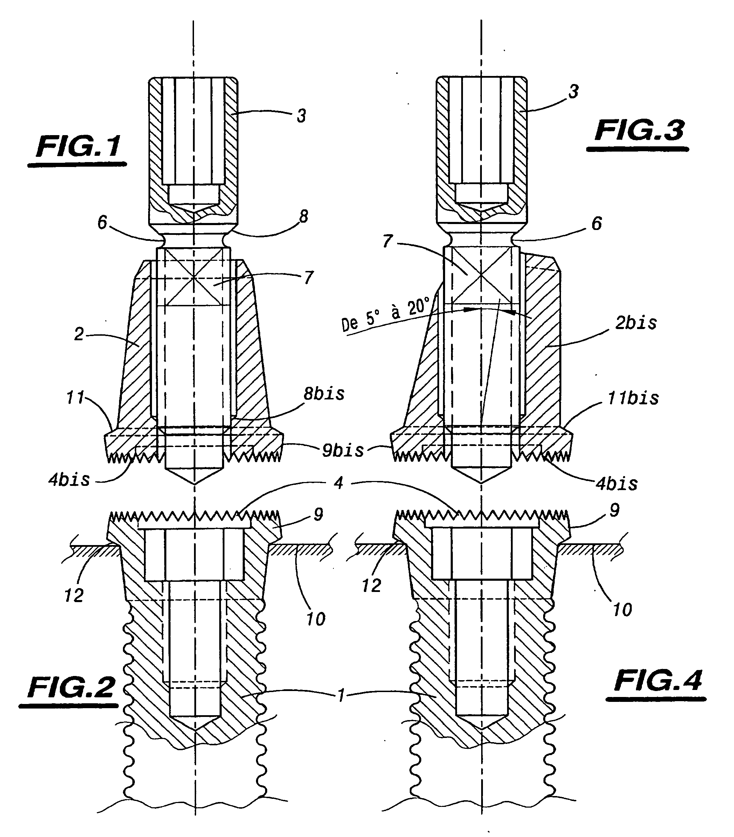

Les figures 1 et 3 représentent la vis de transfixation (3) et, font apparaître, d'une part, la gorge (6) de sécurité à fond arrondi, pouvant servir de fusible, éventuellement, et juxtaposée avec le polygone (7) carré de préférence, devant assurer le dévissage de la partie filetée de la vis (3) restée dans l'implant (1). La partie séparant les deux diamètres de la vis (3) sera plate ou conique (8) à 90° assurant une plus grande surface d'appui dans le pilier.
- L'implant dentaire (1) vissé, est réalisé en titane, zircone ou céramique, la pièce dite pilier ou faux-moignon (2) (2bis) devant recevoir une prothèse dentaire surmontée d'une dent réalisée en céramique ou résine.

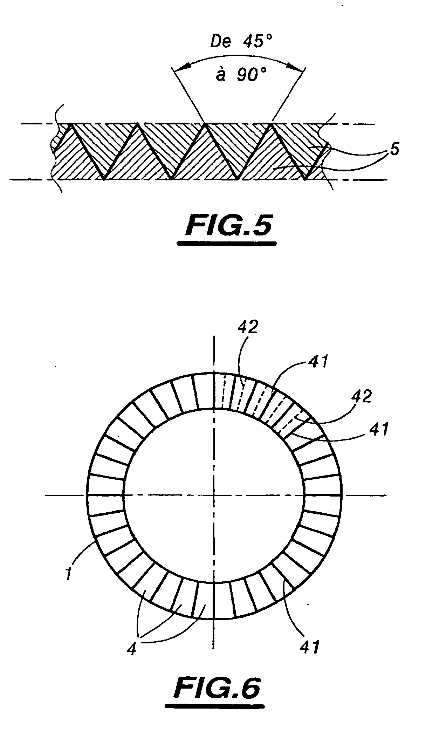

En se référant plus spécialement aux figures 5 et 6 on voit que dans l'exemple représenté la face supérieure du corps d'implant (1) présente 36 dents. On a représenté en trait plein, sur la figure 6, les arêtes formées par les sommets 41 des dents (4) et, pour quelques dents, par des traits interrompus, les fonds 42 des dents triangulaires (4). Partant d'une face plate située dans un plan perpendiculaire à l'axe du corps d'implant, on utilise, pour le taillage des dents, une fraise à section triangulaire convenablement affûtée avec l'angle voulu d'ouverture des dents (cet angle étant de préférence compris entre 45° et 90°) pour découper les dents triangulaires.

Pour que les sommets des dents forment des arêtes 41, la fraise qui se déplace radialement par rapport à l'axe de révolution de corps d'implant, se déplace dans son plan radial avec une direction inclinée, par exemple de 8° à 12° de sorte que la profondeur des dents augmente depuis la partie centrale vers la surface périphérique de l'implant (1). La denture de la face correspondante du pilier (2) est, bien entendu, réalisée de façon sensiblement correspondante pour que les dents des deux pièces s'emboîtent convenablement sur un maximum de surface.

Bien entendu, si les faces sont préalablement coniques, avec une faible conicité, au lieu d'être plates, l'homme de l'art adaptera convenablement l'inclinaison de la trajectoire de la fraise d'usinage des dents dans son plan radial.

L'invention peut encore présenter divers perfectionnement.
- L'implant dentaire (1) vissé dans l'os (10) comporte une légère émergence de 0,5 à 1 mm avec un diamètre légèrement supérieur au diamètre nominal fileté de l'implant (1), ce qui assure une bonne fermeture de l'os (10), par le fait de la petite partie conique (12) qui relie les deux diamètres de l'implant (1).
- Le pilier (2) ou le faux-moignon (2bis) comportent une partie s'emboîtant sur l'implant (1), avec une hauteur variable de 0,3 à 3 mm, voire 4, s'adaptant avec l'épaisseur gingivale. A l'arrière de cette partie de hauteur variable, se trouve une face conique (11) qui doit servir d'appui à la prothèse recevant la dent.
- Selon le perfectionnement de liaison entre l'implant (1) et le pilier ou faux-moignon (2) (2bis), c'est à dire le verrouillage par les 24 à 36 dents taillées (4) (4bis) de 45° à 90° maximum, on obtient un réglage angulaire de 10° à 15° par dent, relatifs au développement par rapport aux 360° de la circonférence. Cette précision de 10° à 15° permet d'obtenir, avec les 4 à 5 inclinaisons possibles du pilier ou faux-moignon (2) (2bis), lorsqu'il est incliné comme sur la figure 3, une position très proche de l'implantation, par rapport aux dents naturelles.
- Contrairement aux systèmes anti-rotationnels polygonaux connus, qui comportent, au maximum 12 positions angulaires et ont toujours un jeu fonctionnel, suivant un diamètre circonscrit de 3,20 mm, pour un hexagone de 2,70 mm sur plats, alors que, si l'on considère qu'une vis de fixation d'un diamètre de 2,00 mm environ, diminue la section assurant la résistance de l'implant ou du pilier en rotation ou flexion constante, l'invention permet d'augmenter cette résistance en solidité, en transmettant les efforts sur un diamètre maximal, soit, le diamètre extérieur de l'implant, qui, lui, dans le cas d'une molaire unitaire, ou pré-molaire, doit être le plus gros possible, tout en restant dans une moyenne générale, soit un diamètre de 4,5 à 6 mm, et en supprimant tout jeu.
- Selon un perfectionnement de la présente invention, l'assurance de la solidité de l'ensemble est obtenue par la fixation, après blocage de la vis (3), qui aura reçu, avant la pose, un peu de ciment dentaire (type frein de vis), déposé autour de la partie lisse de cette vis (3) voire, également, autour de la partie filetée se vissant dans l'implant (1).
- Cette vis (3) comporte quelques particularités, dont la principale est : en cas de rupture, la présence d'une gorge de sécurité (6) devant servir de fusible, en localisant avec précision la rupture éventuelle ; une fois la vis (3) sectionnée, il sera facile de retirer la partie filetée restée dans l'implant (1), grâce à la présence d'une partie carrée (7) prévue à cet effet et, juxtaposée avec la gorge (6).

Le praticien se servira d'une clé spéciale fournie dans le kit d'outillage.

## Revendications

1. Implant dentaire comportant un corps d'implant (1) destiné à être implanté dans le tissu osseux de la mandibule ou du maxillaire, une pièce dite pilier ou faux-moignon (2) (2bis) devant recevoir une prothèse dentaire, l'ensemble des deux pièces implant (1) et pilier (2) (2bis) étant destiné à être solidarisé par une vis de transfixation (3), lesdites deux pièces étant appliquées l'une sur l'autre par deux faces comportant un grand nombre de dents radiales complémentaires, notamment de 24 à 36 dents, **caractérisé en ce que** les sections des dents ont des angles de 45° à 90°.

2. Implant selon la revendication 1, **caractérisé en ce que** les dents (4) de l'une au moins des pièces sont taillées avec des passages de taille inclinés, l'inclinaison étant comprise entre 8° et 12° pour l'une des pièces (1,2 ou 2bis), ou entre 4° et 6° pour chaque pièce.

3. Implant selon l'une des revendications 1 à 2, **caractérisé en ce que** lesdites dents débouchent à la surface extérieure des deux pièces (1) (2) (2bis).

4. Implant selon l'une des revendication 1 à 3, **caractérisé en ce que** le pilier ou faux-moignon (2bis) fait partie d'un jeu de piliers ou faux-moignons pré-inclinés à 5°, 10°, 15° et 20°.

5. Implant selon l'une des revendications 1 à 4, **caractérisé en ce que** lesdites dents radiales (4) ne présentent, sur lesdites faces, que des arêtes et fonds aigus (41,12).

6. Implant selon l'une des revendication 1 à 5, **caractérisé en ce que** la vis de fixation (3) est du type destiné à être freinée par du ciment dentaire.

7. Implant selon l'une des revendications 1 à 6, **caractérisé en ce que** la vis (3) présente une gorge de sécurité (6) servant de fusible, pour permettre de dévisser la partie filetée de vis restée dans l'implant par l'intermédiaire d'une clé coopérant avec une partie (7) de vis au voisinage de la gorge (6).

## Patentansprüche

1. Zahnimplantat mit einem Implantatkörper (1), der dazu bestimmt ist, in das Knochengewebe des Unterkiefers oder Oberkiefers implantiert zu werden, einem als Zapfen oder falscher Stumpf (2) (2bis) bezeichneten Teil, das eine Zahnprothese aufnehmen soll, wobei die Baugruppe aus diesen beiden Teilen, Implantat (1) und Zapfen (2) (2bis), dazu bestimmt ist, durch eine Verbindungsschraube (3) verbunden zu werden, wobei diese beiden Teile mit zwei Flächen aneinander anliegen, die eine große Anzahl von komplementären radialen Zähnen, insbesondere 24 bis 36 Zähnen aufweisen, **dadurch gekennzeichnet, daß** die Querschnitte der Zähne Winkel von 45° bis 90° haben.

2. Implantat nach Anspruch 1, **dadurch gekennzeichnet, daß** die Zähne (4) wenigstens eines der Teile mit geneigten Frässchnitten gefräst sind, deren Neigung zwischen 8° und 12° für eines der Teile (1, 2 oder 2bis) oder zwischen 4° und 6° für jedes Teil beträgt.

3. Implantat nach einem der Ansprüche 1 bis 2, **dadurch gekennzeichnet, daß** die genannten Zähne an der äußeren Oberfläche der beiden Teile (1) (2) (2bis) enden.

4. Implantat nach einem der Ansprüche 1 bis 3, **dadurch gekennzeichnet, daß** der Zapfen oder Stumpf (2bis) Teil eines Satzes von Zapfen oder Stümpfen ist, die unter Winkeln von 5°, 10°, 15° und 20° vorgeneigt sind.

5. Implantat nach einem der Ansprüche 1 bis 4, **dadurch gekennzeichnet, daß** die radialen Zähne (4) auf den genannten Flächen nur Spitzen und spitze Mulden (41, 12) bilden.

6. Implantat nach einem der Ansprüche 1 bis 5, **dadurch gekennzeichnet, daß** die Verbindungsschraube (3) dazu ausgebildet ist, mit Zahnzement fixiert zu werden.

7. Implantat nach einem der Ansprüche 1 bis 6, **dadurch gekennzeichnet, daß** die Schraube (3) eine Sicherheitsnut (6) aufweist, die als Sollbruchstelle dient, um das Ausschrauben des im Implantat verbliebenen Gewindeteils der Schraube mit Hilfe eines Schlüssels zu ermöglichen, der mit einem Teil (7) der Schraube in der Nachbarschaft der Nut (6) zusammenwirkt.

## Claims

1. A dental implant comprising an implant body (1) adapted to be implanted in the bony tissue of the upper or lower jaw, a pillar or pseudostump part (2) (2bis) adapted to receive a dental prosthesis, the combination of the two parts consisting of the implant (1) and the pillar (2) (2bis) being adapted to be fastened together by a transfixing screw (3), said two parts having two faces pressed together and comprising a large number of complementary radial teeth, in particular from 24 to 36 teeth, **characterised in that** the sections of the teeth have angles from 45° to 90°.

2. An implant according to claim 1, **characterised in that** the teeth (4) of at least one of the parts are cut with inclined cut passages, the inclination being from 8° to 12° for one of the parts (1, 2 or 2bis) or from 4° to 6° for each of the parts.

3. An implant according to either claim 1 or 2, **characterised in that** said teeth open onto the exterior surface of the two parts (1) (2) (2bis).

4. An implant according to any one of claims 1 to 3, **characterised in that** the pillar or pseudostump (2bis) is part of a set of pillars or pseudostumps pre-inclined at 5°, 10°, 15° and 20°.

5. An implant according to any one of claims 1 to 4, **characterised in that** said radial teeth (4) have on said faces only sharp edges and troughs (41, 12).

6. An implant according to any one of claims 1 to 5, **characterised in that** the fixing screw (3) is of the kind intended to be locked by dental cement.

7. An implant according to any one of claims 1 to 6, **characterised in that** the screw (3) has a safety groove (6) serving as a fusible portion to enable unscrewing of the threaded screw portion remaining in the implant by means of a key co-operating with a screw portion (7) in the vicinity of the groove (6).
